# EUROPÄISCHE PATENTSCHRIFT

(11) **EP 1 805 048 B1**
(45) Veröffentlichungstag und Bekanntmachung des Hinweises auf die Patenterteilung: **24.09.2008**
(21) Anmeldenummer: 05770230.0
(22) Anmeldetag: 28.07.2005
(51) Int. Cl.: B60J 7/02

(54) **FÜHRUNGSVORRICHTUNG FÜR EIN BEWEGBARES DACHELEMENT EINES ÖFFNUNGSFÄHIGEN FAHRZEUGDACHES**
GUIDING DEVICE FOR A MOVING ROOF ELEMENT OF VEHICLE ROOF THAT CAN BE OPENED
DISPOSITIF DE GUIDAGE POUR ELEMENT MOBILE D'UN TOIT OUVRANT DE VEHICULE

(30) Priorität: 03.08.2004 DE 102004037797
(43) Veröffentlichungstag der Anmeldung: 11.07.2007
(73) Patentinhaber: Webasto AG, 82131 Stockdorf (DE)
(72) Erfinder: SEIFERT, Wolfgang, 82407 Wielenbach (DE); PIHALE, Johann, 82131 Oberbrunn (DE); HÖLZEL, Dominik, 82194 Gröbenzell (DE); SEDLMEIR, Andreas, 86919 Utting (DE)
(74) Vertreter: Konnerth, Dieter Hans
(86) Internationale Anmeldenummer: PCT/DE2005/001342
(87) Internationale Veröffentlichungsnummer: WO 2006/012868

(56) Entgegenhaltungen:
- DE-A1- 10 003 377
- DE-A1- 10 144 756
- US-A- 4 984 332
- US-A- 6 164 718

## Beschreibung

Die Erfindung betrifft eine Führungsvorrichtung für ein bewegbares Dachelement eines öffnungsfähigen Fahrzeugdaches mit einer mit dem Dachelement verbundenen Führungskulisse und mit einer Führungseinheit, die zwei gegeneinander gerichtete und die Führungskulisse zwischen sich führende Führungsflächen aufweist, wobei eine der Führungsflächen an der Führungseinheit relativ zur Führungskulisse verstellbar aufgenommen und gegen die andere Führungsfläche mittels einer Federeinrichtung vorgespannt ist.

Mit einer derartigen Führungsvorrichtung kann durch relative Längsbewegung der Führungseinheit entlang der Führungskulisse das Dachelement ausgestellt bzw. wieder abgesenkt werden.

Aus der DE 101 44 756 C2 und US 6164718 ist eine gattungsgemäße Führungsvorrichtung bekannt geworden, bei der ein Gleitelement einer Führungseinheit oder Führungsklaue unter federelastischer Vorspannung gegen eine Kulissenbahn gedrückt ist und eine Gegenfläche der Führungsklaue an der gegenüberliegenden Seite der Kulissenbahn anliegt. Die federelastische Vorspannung wird durch ein einziges elastomeres Federelement bereitgestellt, das von dem hülsenförmigen Gleitelement umgeben ist. Unter Berücksichtigung des vorhandenen Bauraumes kann die Abstützkraft dieses Federelements bei einem von der Führungsvorrichtung zu führenden und eine große Masse aufweisenden Deckel eines öffnungsfähigen Fahrzeugdaches zu gering sein, um bei ausreichender Elastizität der Abstützung ein Klappern der Führungsvorrichtung auch bei unebener Fahrbahnoberfläche verhindern zu können.

Aus der EP 1 070 614 A1 ist eine Führungsvorrichtung bekannt geworden, bei der eine Führungsklaue eine Führungsausnehmung aufweist, in der ein Führungssteg verschiebbar aufgenommen ist. In der Führungsklaue ist ein elastisches Element in Form einer Feder angeordnet, die die untere Führungsfläche für den Führungssteg bildet und deren konvexer Abschnitt gegen den Führungssteg drückt, so dass ein Spiel zwischen der Führungsklaue und dem Führungssteg ausgeglichen wird. Die Feder ist in Gleitkontakt mit dem Führungssteg. Um ihre Stützfunktion ausführen zu können, muss sie mit deutlicher Kraft gegen den Führungssteg drücken, wodurch die Reibung erhöht wird. Das elastische Verhalten einer derartigen Feder ist ungenügend.

Aufgabe der Erfindung ist es, eine eingangs genannte Führungsvorrichtung zu schaffen, die im Hinblick auf das federelastische Abstützen verbessert ist.

Diese Aufgabe wird bei der oben genannten Führungsvorrichtung erfindungsgemäß dadurch gelöst, dass die Federeinrichtung zumindest zwei Federelemente aufweist, die in Parallelschaltung an der Führungseinrichtung angeordnet sind.

Vorteilhafte Ausgestaltungen der Erfindung sind in den Unteransprüchen angegeben.

Durch die Abstützung mittels zumindest zweier parallel geschalteter Federelemente, die auch Federabschnitte eines gemeinsamen Federteils sein können, wird die Federeinrichtung verstärkt, wobei insbesondere im Hinblick auf den verfügbaren Bauraum eine geringere Verformung der insbesondere elastomeren Federelemente bei dennoch hoher Federabstützkraft gewährleistet ist. Durch die Addition der Federkennlinien von zumindest zwei Federelementen in Parallelschaltung lässt sich eine steilere Gesamtfederkennlinie einstellen, die durch Einzelfedern in diesem Maße mit geringem Aufwand nicht realisierbar ist.

In bevorzugter Gestaltung ist ein die Gleitfläche enthaltendes Bauteil von dem ersten Federelement an einer ersten Abstützstelle der Führungseinheit und von dem zweiten Federelement an einer zweiten Abstützstelle der Führungseinheit abgestützt. Damit können günstige Anordnungen der beiden Federelemente gewählt werden. Jedes weitere Federelement kann das die Gleitfläche enthaltende Bauteil sowohl an der ersten Abstützstelle wie auch an der zweiten oder einer weiteren Abstützstelle abstützen.

Gemäß einer weiteren bevorzugten Gestaltung bildet das zweite Federelement das die Gleitfläche enthaltende Bauteil oder es trägt die Gleitfläche und es ist von dem ersten Federelement an der ersten Abstützstelle der Führungseinheit abgestützt, wobei es selbst an der zweiten Abstützstelle der Führungseinheit abgestützt ist.

Zweckmäßigerweise ist die erste Abstützstelle eine feste Achse oder ein fester Bolzen der Führungseinheit und die zweite Abstützstelle ein die Führungseinheit tragender Schlitten oder ein an der Führungseinheit oder dem Schlitten angebrachtes Abstützteil.

Das erste Federelement kann eine beliebig gestaltete Kunststoff oder Metallfeder sein. Vorzugsweise ist es ein insbesondere ringförmiges Elastomerteil.

Das zweite Federelement kann ebenfalls ein Elastomerteil oder auch eine Feder und insbesondere eine Blattfeder sein.

Grundsätzlich besteht bei einem Elastomerteil die Möglichkeit einer weitgehend beliebigen Formgestaltung des Federelements insbesondere im Hinblick auf eingeschränkte Platzverhältnisse für die Führungseinheit.

Gemäß einer bevorzugten Gestaltung ist die Blattfeder mittels ihrer zwei insbesondere gegeneinander gerichteten Federenden an der zweiten Abstützstelle befestigt und ihr federndes Mittelteil ist mit dem die Gleitfläche tragenden Bauteil verbunden oder es bildet selbst die Gleitfläche. Eine derart angebrachte Blattfeder bietet eine hohe Federabstützkraft vertikal zur zweiten Abstützstelle und ein ausreichendes Abstütz- und Ausgleichsvermögen parallel zur zweiten Abstützstelle.

Eine weitere Gestaltung sieht vor, dass das erste Federelement und das zweite bzw. jedes weitere Federelement Materialabschnitte eines gemeinsamen Elastomerteils sind. Dabei können die beiden Federelemente gleiche oder unterschiedliche Federeigenschaften aufweise.

Zweckmäßigerweise ist die Führungseinheit bzw. der Schlitten entlang einer dachfesten Führungsschiene verstellbar, so dass die Führungseinheit entlang der Kulissenbahn verschiebbar ist und aufgrund des Verlaufs der Kulissenbahn eine Hub- und Senkbewegung des Deckels bewirken kann.

Nachfolgend werden Ausführungsbeispiele der Führungsvorrichtung unter Bezugnahme auf die Zeichnung näher erläutert. Es zeigt:
- Fig. 1: in perspektivischer Draufsicht eine Führungsvorrichtung mit einem Trägerelement für ein bewegbares Dachelement und einer vereinfacht dargestellten Führungseinheit für das Trägerelement;
- Fig. 2: in einer Schnittansicht eine Prinzipdarstellung der Führungseinheit mit einer Kulissenbahn des Trägerelements;
- Fig. 3: in einer Schnittansicht ein erstes Ausführungsbeispiel der Führungseinheit;
- Fig. 4: in einer Schnittansicht ein zweites Ausführungsbeispiel der Führungseinheit;
- Fig. 5: in einer Schnittansicht ein drittes Ausführungsbeispiel der Führungseinheit;
- Fig. 6: in einer Schnittansicht ein viertes Ausführungsbeispiel der Führungseinheit;
- Fig. 7: in einer Schnittansicht ein fünftes Ausführungsbeispiel der Führungseinheit; und
- Fig. 8: in einer Schnittansicht ein sechstes Ausführungsbeispiel der Führungseinheit.

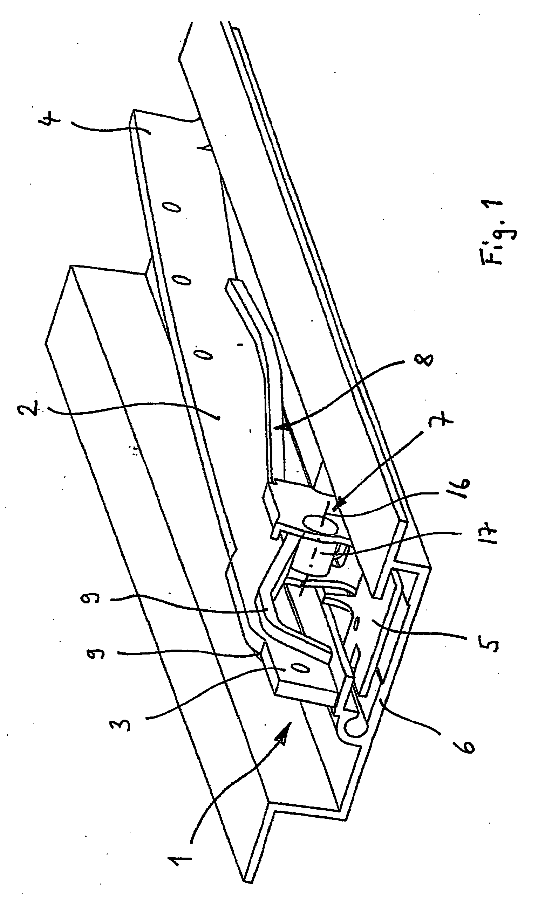

Eine Führungsvorrichtung 1 (siehe Fig. 1) für ein bewegbares Dachelement wie z. B. einen Deckel (nicht dargestellt) eines öffnungsfähigen Fahrzeugdaches weist ein Trägerelement 2 auf, das an der Unterseite des Deckels fest angebracht ist. Der Deckel des öffnungsfähigen Fahrzeugdaches, das beispielsweise ein Schiebedach, ein Schiebehebedach oder ein Spoilerdach ist, ist in bekannter Weise zwischen einer Schließstellung und einer Offenstellung zum Freigeben einer Dachöffnung des Fahrzeugdaches verstellbar. Durch Anheben des hinteren Endes 3 des Trägerelements 2 gegenüber seinem vorderen Ende 4 kann der Deckel in eine Schwenk- oder Lüftungsstellung mit angehobenem Hinterrand verstellt werden.

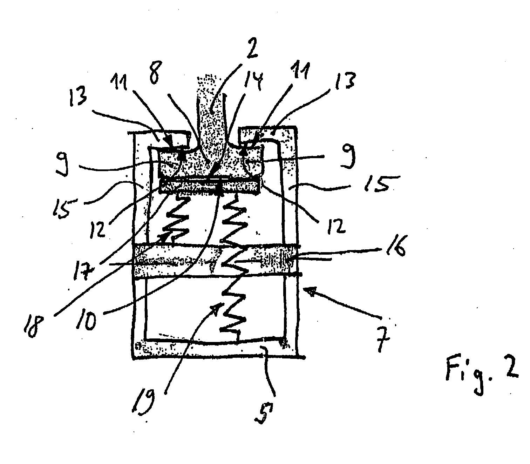

Die Führungsvorrichtung 1 weist einen Schlitten 5 auf, der an einer dachfesten Führungsschiene 6 entlang des Trägerelements 2 verschiebbar aufgenommen und z. B. über ein drucksteifes Antriebskabel verstellbar ist. Der Schlitten 5 enthält eine Führungseinheit 7 (in Fig. 1 schematisch dargestellt), die mit einer Kulissenbahn 8 des Trägerelements 2 in Eingriff ist. Die Kulissenbahn 8 ist als im Querschnitt T-förmiger Führungssteg gebildet und am Unterrand des Trägerelements 2 derart angeordnet (siehe auch Fig. 2), dass beidseits des Trägerelements 2 jeweils ein Kulissenabschnitt 9 des Führungsstegs bzw. der Kulissenbahn 8 seitlich hervorsteht.

Die Kulissenbahn 8 enthält an ihrer Unterseite eine untere Anlagefläche 10 sowie an der Oberseite jedes seitlich hervorstehenden Kulissenabschnitts 9 eine obere Anlagefläche 11. An jeder oberen Anlagefläche 11 liegt eine Gleitfläche 12 einer jeweiligen Umgreifung 13 der Führungseinheit 7 des Schlittens 5 an. An der unteren Anlagefläche 10 liegt eine Gleitfläche 14 der Führungseinheit 7 des Schlittens 5 an, die unter Vorspannung an der unteren Anlagefläche 10 der Kulissenbahn 8 gehalten ist, so dass die Kulissenbahn 8 bzw. die beiden Kulissenabschnitte 9 in vertikaler Richtung spielfrei an der Führungseinheit 7 gehalten und geführt ist bzw. sind.

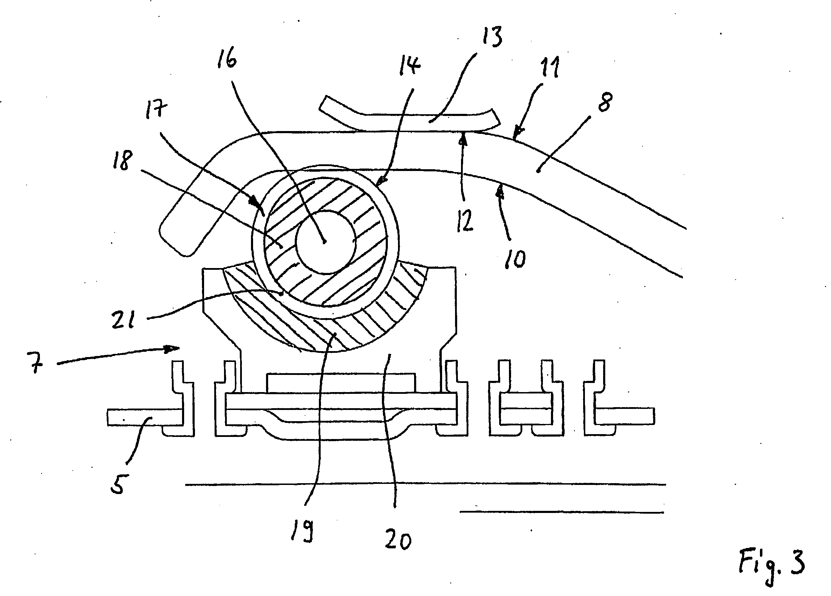

Die Führungseinheit 7 des Schlittens 5 enthält zwei sich gegenüberliegende Seitenwände 15 mit den an ihren Oberenden angeordneten Umgreifungen 13, die gegenüber den Seitenwänden 15 rechtwinklig angeordnet und einwärts gegeneinander gerichtet sind. An einer festen Achse 16, die die beiden Seitenwänden 15 fest miteinander verbindet und z. B. von einem Bolzen gebildet wird, ist eine Gleitrolle oder Gleithülse 17 unter Zwischenschaltung eines ersten ringförmigen elastomeren Federelements 18 (in Fig. 2 schematisch dargestellt, siehe auch Fig. 3) fest angebracht. Die Gleithülse 17 ist mittels des ersten Federelements 18 unter Vorspannung gegen die Unterseite bzw. die untere Anlagefläche 10 der Kulissenbahn 8 gedrückt. Durch die Vorspannkraft des ersten Federelements 18 werden über die Achse 16 und die Seitenwände 15 die beiden Umgreifungen 13 gegen die oberen Anlageflächen 11 gedrückt, so dass die Kulissenbahn 8 zwischen den Umgreifungen 13 und der Gleithülse 17 spielfrei aufgenommen ist.

Die Kulissenbahn 8 verläuft entlang des Trägerelements 2 in vertikaler oder Z-Richtung auf unterschiedlichem Niveau. Wenn der Schlitten 5 mit der Führungseinheit 7 relativ zum Trägerelement 2 in Längsrichtung verschoben wird, erfolgt somit eine Ausstell- bzw. Schwenkbewegung des Trägerelements 2 und damit des daran befestigten Deckels.

Das Trägerelement 2 kann beispielsweise als Blechteil gefertigt sein, wobei die Kulissenbahn 8 beispielsweise mit POM umspritzt sein kann. Das gesamte Trägerelement 2 kann jedoch auch aus Kunststoff wie z. B. POM bestehen.

Diese bisher beschriebene Gestaltung der Führungsvorrichtung ist aus der DE 101 44 756 C2 bekannt, auf die gegebenenfalls zur weiteren Erläuterung verwiesen wird.

Nachfolgend werden unterschiedliche Ausführungsbeispiele der erfindungsgemäßen Führungseinheit 7 des Schlittens 5 beschrieben. Diese basieren auf der Prinzipdarstellung der Fig. 2, wonach die Gleitfläche 14 bzw. die die Gleitfläche 14 bildende Gleithülse 17 oder allgemein das die Gleitfläche 14 bildende Bauteil von einem zweiten Federelement 19 gegenüber dem Schlitten 5 bzw. der Führungseinheit 7 abgestützt ist. Die beiden Federelemente 18 und 19 sind gemäß dieser Gestaltung in Parallelschaltung angeordnet.

Bei dem in Fig. 3 dargestellten ersten Ausführungsbeispiel ist die Gleithülse 17 gemäß der obigen Beschreibung durch das erste Federelement 18 an der Achse 16 und damit an der Führungseinheit 7 abgestützt. Die Gleithülse 17 stützt sich des weiteren gegenüber dem Schlitten 5 bzw. der Führungseinheit 7 mittels des zweiten Federelementes 19 ab, das aus elastomeren Material gebildet ist und unterseitig an einer am Schlitten 5 angebrachten Abstützung 20 und oberseitig an einem Unterabschnitt 21 der Gleithülse 17 angebracht ist. Das zweite Federelement 19 hat gemäß Fig. 3 die Form eines Kreisringabschnitts und erstreckt sich bei konstanter radialer Dicke beispielsweise über etwa 150°C bis 160°C bezüglich der Achse 16. Diese Gestaltung des zweiten Federelements 19 schließt bei einer Längsverschiebung des Schlittens 5 im Hinblick auf den kurvenförmigen Verlauf der Kulissenbahn 8 eine Kollision des zweiten Federelements 19 und seiner Abstützung 20 mit der Kulissenbahn 8 aus.

Die Gleithülse 17 ist somit gegenüber dem Schlitten 5 bzw. der Führungseinheit 7 durch die beiden in Parallelschaltung angeordneten Federelemente 18 und 19 abgestützt. Eine vom Deckel über die Kulissenbahn 8 abwärts gerichtete Belastung drückt die Gleithülse 17 gleichzeitig gegen die Kraft der beiden Federelemente 18 und 19. Das erste Federelement 18 stützt aufgrund seiner zur Achse 16 symmetrischen Gestaltung die Gleithülse 17 gleichermaßen sowohl in Vertikalrichtung wie auch in Längsrichtung ab, während das zweite Federelement 19 aufgrund seiner Gestaltung eine unterstützende Abstützung bietet, die vorwiegend in Vertikalrichtung und in geringerem Maße in Längsrichtung wirkt. Damit wird ein Toleranzausgleich zwischen der Gleitfläche 14 und der Umgreifung 13 und der dazwischen aufgenommenen Kulissenbahn 8 bewirkt.

Durch die Aufteilung der an der Abstützung bzw. der Gleithülse 17 wirkenden Federkräfte auf ein von den beiden Federelementen 18 und 19 bereitgestelltes größeres Elastomervolumen lassen sich in dem gegebenen Bauraum die durch die Gewichtskraft des Deckels über die Kulissenbahn 8 eingeleiteten Spannungen in jedem der beiden Federelemente 18 und 19 reduzieren. Hierdurch wird eine bessere Dauerhaltbarkeit des Elastomermaterials der beiden Federelemente 18 und 19 ermöglicht.

Die Federkonstanten oder Federkennlinien der beiden Federelemente 18 und 19 können gleich oder unterschiedlich sein. Durch die Addition der zwei Federkennlinien in Parallelschaltung kann eine steilere Gesamtkennlinie eingestellt werden, mit der das gewünschte Federverhalten bereitgestellt werden kann. Ein allzu weiches Federverhalten, das ein Klappern der Führungsvorrichtung bei schwingendem Deckel zulässt, kann ebenso ausgeschlossen werden wie ein übermäßig hartes Federverhalten, bei dem durch hohe Reibung zwischen der Kulissenbahn 8 und der Gleithülse 17 sowie der Umgreifung 13 ein hoher Kraftaufwand zum Verschieben des Schlittens 5 erforderlich wäre und damit eine Schwergängigkeit der Führungseinheit 7 vorliegen würde.

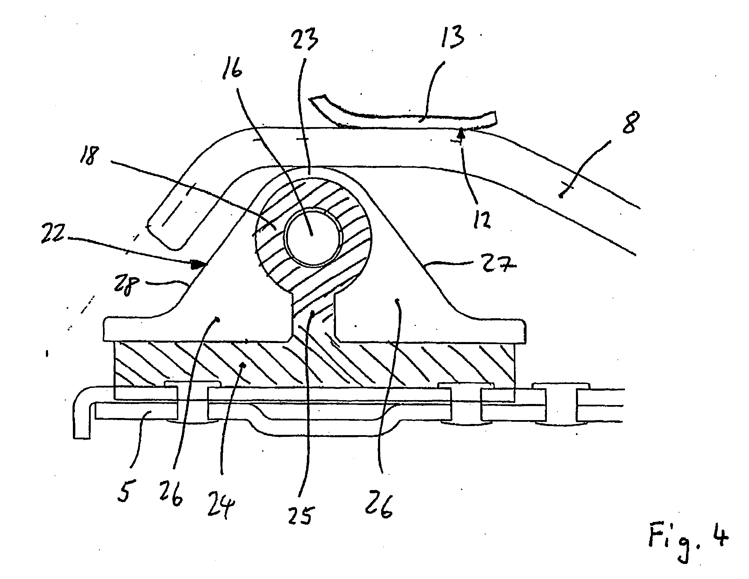

Ein zweites Ausführungsbeispiel (siehe Fig. 4) enthält ebenfalls ein ringförmiges und auf der Achse 16 angebrachtes erstes elastomeres Federelement 18. Ein festes nicht verformbares Führungsteil 22 umgibt das erste Federelement 18, wobei sein an der Kulissenbahn 8 anliegender oberer Gleitabschnitt 23 entsprechend eines Teils einer Gleithülse gebildet ist. Ein zweites elastomeres Federelement 24 ist z. B. in Form einer Platte gebildet, am Schlitten 5 angebracht und über eine Materialbrücke 25 mit dem ersten Federelement 18 einstückig verbunden ist. Das feste Führungsteil 22 erstreckt sich mit seinem in Längsrichtung verlängerten Unterabschnitt 26 bis an die Oberseite des zweiten Federelements 24 und an die Materialbrücke 25 und ist mit diesen Teilen fest verbunden. Durch die abgeschrägten Vorder- und Rückseiten 27 bzw. 28 des festen Führungsteils 22 kann auch diese Führungseinheit 7 im Gleitkontakt des oberen Gleitabschnitts 23 dem Kurvenverlauf der Kulissenbahn 8 folgen. Die beiden Federelemente oder Federbereiche 18 und 24 sind zwar miteinander verbunden, stellen jedoch im wesentlichen eigenständig wirkende Federelemente dar. Demzufolge könnten die beiden Federelemente oder Federbereiche 18 und 24 auch ohne die verbindende Materialbrücke 25 gebildet sein. Auch bei diesem Ausführungsbeispiel kann eine hohe vertikale Belastung durch die beiden elastomeren Federelemente 18 und 24 aufgenommen werden, wobei auch Scherkräfte in x- bzw. Längsrichtung abgestützt werden. Auch hier können die beiden Federelemente oder Federbereiche 18 und 24 gleiche oder unterschiedliche Federkonstanten aufweisen. Durch das Verlagern des elastomeren Federelements 24 von der Gleitfläche 14 weg an den Schlitten 5 kann das elastomere Federelement 24 größer gebildet werden, so dass auch bei hoher erforderlicher Abstützkraft nur eine geringe Verformung des Elastomermaterials resultiert, so dass dessen Schädigung durch übermäßige Kompression ausgeschlossen werden kann.

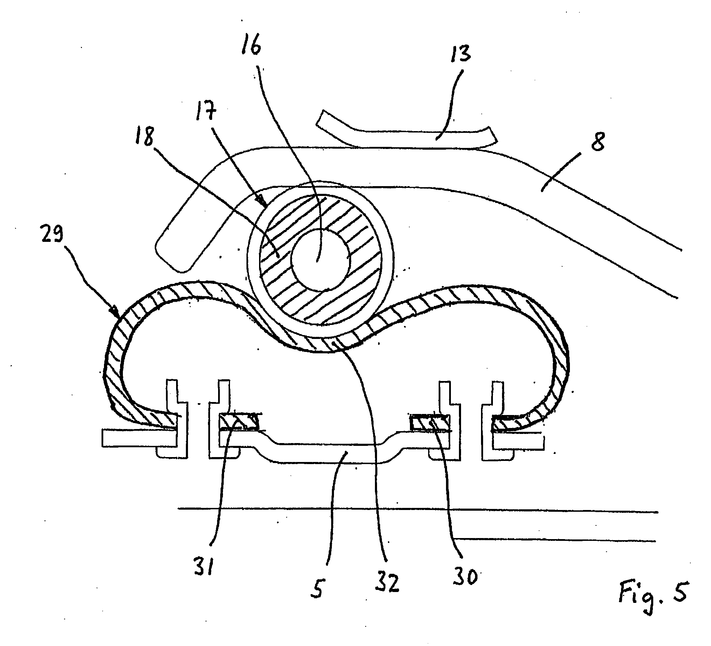

Gemäß einem dritten Ausführungsbeispiel (siehe Fig. 5) ist die Gleithülse 17 mittels eines ersten Federelements 18 entsprechend dem ersten Ausführungsbeispiel (Fig. 3) auf der Achse 16 fest angebracht. Ein zweites Federelement 29, das in der Art einer Blattfeder gebildet ist, ist mit seinen beiden gegeneinander gerichteten Enden 30 und 31 am Schlitten 5 befestigt. Das federnde Mittelteil 32 des zweiten Federelements 29 weist eine an die Form der Gleithülse 17 angepasste nach unten ausbauchende Auswölbung auf. Das zweite Federelement 29 ist mit der Auswölbung des federnden Mittelteils 32 am Unterabschnitt 21 der Gleithülse 17 fest angebracht und drückt die Gleithülse 17 unter Federvorspannung nach oben gegen die Kulissenbahn 8. Die Wirkungsweise der beiden Federelemente 18 und 29 entspricht grundsätzlich derjenigen des ersten Ausführungsbeispiels, wobei die Blattfeder bei entsprechender Auslegung eine höhere Ausgleichsbewegung und damit einen größeren Toleranzausgleich insbesondere in Längsrichtung ermöglicht.

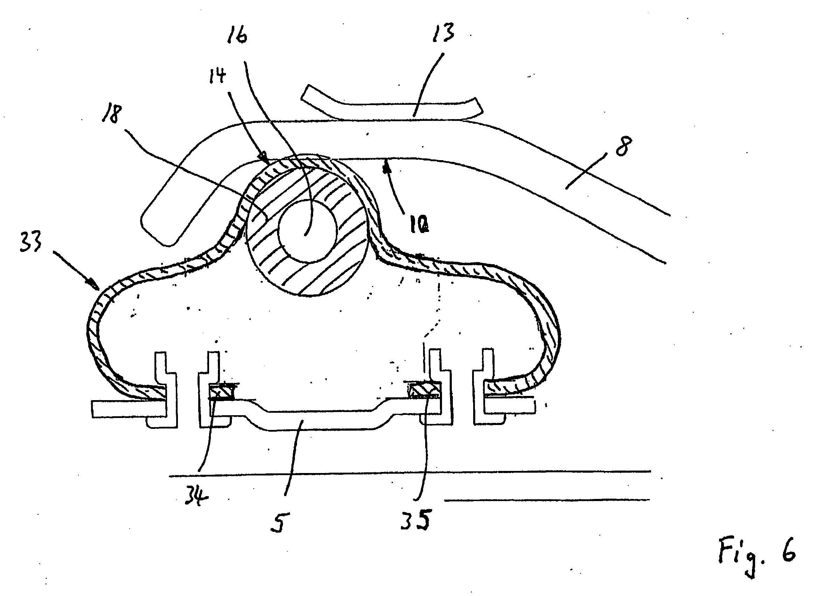

Das vierte Ausführungsbeispiel (siehe Fig. 6) weist als Abwandlung des dritten Ausführungsbeispiels ebenfalls das erste ringförmige elastomere Federelement 18 auf, das die Achse 16 umgibt und daran fest angebracht ist. Das ebenfalls in der Art einer Blattfeder gebildete zweite Federelement 33 ist mit seinen beiden gegeneinander gerichteten Enden 34 und 35 am Schlitten 5 befestigt und weist ein federndes Mittelteil 36 auf, das eine an die zylindrische Form des ersten Federelements 18 angepasste und nach oben ausbauchende Auswölbung enthält. Das zweite Federelement 29 ist mit der Auswölbung des federnden Mittelteils 32 an der oberen Hälfte des ersten Federelements 18 befestigt und ist aufgrund der Federvorspannung nach oben gegen die Kulissenbahn 8 gedrückt. Das zweite Federelement 29 bildet an seinem Mittelteil 36 die Gleitfläche 14, die in Gleitkontakt mit der Gleitfläche 12 der Kulissenbahn 8 ist. Durch diesen einfachen Aufbau kann die Gleithülse 17 eingespart werden.

Die Blattfedern der beiden voranstehenden Ausführungsbeispiele können auch in anderer Weise befestigt werden. So können die beiden Federenden auch in zueinander paralleler Ausrichtung am Schlitten derart befestigt werden, dass die Blattfeder im wesentlichen U-förmig angeordnet ist. Des weiteren könnten die Federenden 30 und 31 bzw. 34 und 35 im Gegensatz zu den Darstellung in den Fig. 5 und 6 auch voneinander weg weisen, wobei eine solche Variante einen größeren Platzbedarf für die Blattfeder benötigen würde.

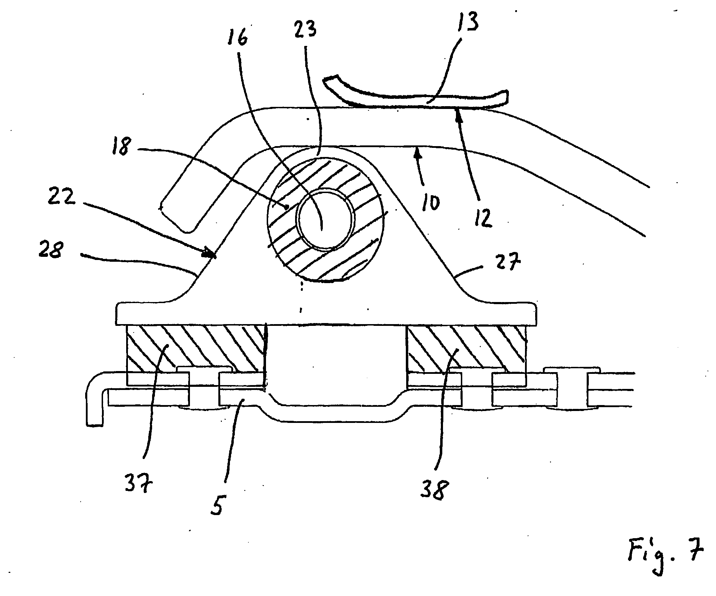

Ein fünftes Ausführungsbeispiel (siehe Fig. 7) ist eine Abwandlung des zweiten Ausführungsbeispiels (Fig. 4) und enthält ebenfalls das ringförmige und auf der Achse 16 angebrachte erste elastomere Federelement 18, das vom festen nicht verformbaren Führungsteil 22 am Umfang vollständig umgeben ist. Statt des zweiten elastomeren Federelements 24 enthält die Führungseinheit 7 ein zweites und ein drittes elastomeres Federelement 37 bzw. 38 in Parallelschaltung, die als voneinander beabstandete Elastomerblöcke das Führungsteil 22 unterseitig am Schlitten 5 abstützen und mit beiden Teilen fest verbunden sind. Das zweite und das dritte elastomere Federelement 37 bzw. 38 können gleiche oder unterschiedliche Federeigenschaften aufweisen.

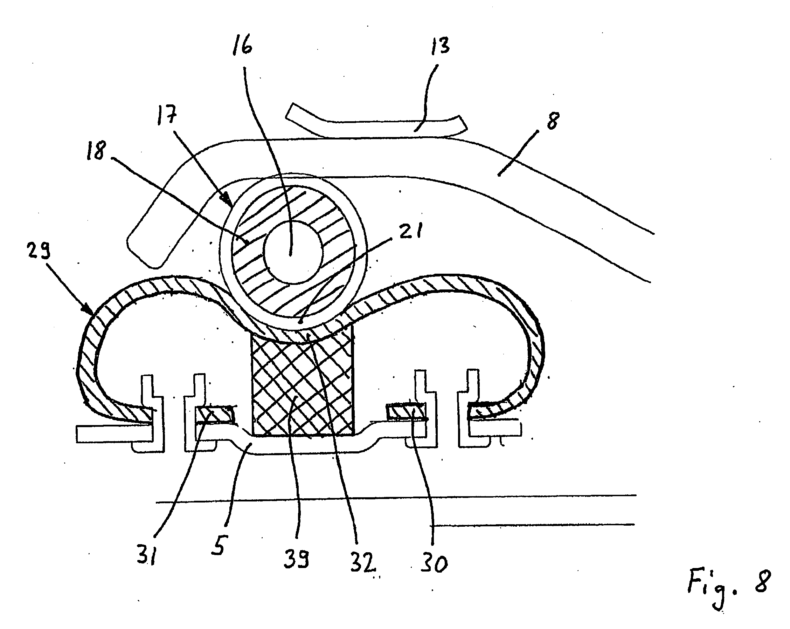

Gemäß einem sechsten Ausführungsbeispiel (siehe Fig. 8), das eine Abwandlung des dritten Ausführungsbeispiels (Fig. 5) ist, ist die Gleithülse 17 ebenfalls mittels eines ersten Federelements 18 auf der Achse 16 fest angebracht. Zusätzlich zu dem in der Art einer Blattfeder gebildeten zweiten Federelement 29 ist ein drittes Federelement 39 vorgesehen, das zwischen der Auswölbung des federnden Mittelteils 32 am Unterabschnitt 21 der Gleithülse 17 und dem Schlitten 5 oder einem anderen festen Teil der Führungseinheit 7 angeordnet und mit zumindest einem dieser Teile fest verbunden ist. Auch hier kann durch entsprechende Wahl der Federeigenschaften der einzelnen Federelemente das gewünschte Gesamtfederverhalten eingestellt werden.

Weiterhin können bei allen Ausführungsbeispielen zusätzliche Federelemente die Gleitfläche 14 bzw. das die Gleitfläche tragende Bauteil 17 am Schlitten 5 oder einem anderen festen Teil der Führungseinheit 7 abstützen.

Bei allen Ausführungsbeispielen ist der Führungssteg bzw. die Führungskulisse 8 nicht auf die beschriebene T-förmige Querschnittsform beschränkt, sondern kann beispielsweise auch eine L-förmige Querschnittsform mit nur einem seitlichen Kulissenabschnitt 9 aufweisen.

### Bezugszeichenliste

- 1: Führungsvorrichtung
- 2: Trägerelement
- 3: hinteres Ende
- 4: vorderes Ende
- 5: Schlitten
- 6: Führungsschiene
- 7: Führungseinheit
- 8: Kulissenbahn
- 9: Kulissenabschnitt
- 10: untere Anlagefläche
- 11: obere Anlagefläche
- 12: Gleitfläche
- 13: Umgreifung
- 14: Gleitfläche
- 15: Seitenwand
- 16: Achse
- 17: Gleithülse
- 18: erstes Federelement
- 19: zweites Federelement
- 20: Abstützung
- 21: Unterabschnitt
- 22: Führungsteil
- 23: Gleitabschnitt
- 24: zweites Federelement
- 25: Materialbrücke
- 26: Unterabschnitt
- 27: Vorderseite
- 28: Rückseite
- 29: zweites Federelement
- 30: Federende
- 31: Federende
- 32: Mittelteil
- 33: zweites Federelement
- 34: Federende
- 35: Federende
- 36: Mittelteil
- 37: zweites Federelement
- 38: drittes Federelement
- 39: drittes Federelement

## Patentansprüche

1. Führungsvorrichtung (1) für ein bewegbares Dachelement eines öffnungfähigen Fahrzeugdaches
mit einer mit dem Dachelement verbundenen Führungskulisse (9) und mit einer Führungseinheit (7),
die an einem Schlitten (5), der an einer dachfesten Führungsschiene (6) entlang der Führungskulisse (9) verschiebbar aufgenommen ist, angeordnet ist und zwei gegeneinander gerichtete und die Führungskulisse (9) zwischen sich führende Führungsflächen (12, 14) aufweist,
wobei eine der Führungsflächen (14) an der Führungseinheit (7) relativ zur Führungskulisse (9) verstellbar aufgenommen und gegen die andere Führungsfläche (12) mittels einer Federeinrichtung (18, 19) vorgespannt ist,
**dadurch gekennzeichnet,**
**dass** die Federeinrichtung zwei Federelemente (18, 19 bzw. 24, 29, 33) aufweist, die in Parallelschaltung an der Führungseinheit (7) angeordnet sind:

2. Führungsvorrichtung nach Anspruch 1,
**dadurch gekennzeichnet, dass** ein die Gleitfläche (14) enthaltendes Bauteil (17; 22) von dem ersten Federelement (18) an einer ersten Abstützstelle (16) der Führungseinheit (5, 7) und von dem zweiten Federelement (19; 24; 29) an einer zweiten Abstützstelle (5) der Führungseinheit (5, 7) abgestützt ist.

3. Führungsvorrichtung nach Anspruch 2,
**dadurch gekennzeichnet, dass** ein weiteres Federelement (37, 38, 39) das die Gleitfläche (14) enthaltende Bauteil (17; 22) an der ersten Abstützstelle (16) oder der zweiten oder einer weiteren Abstützstelle (5) der Führungseinheit (5, 7) abstützt.

4. Führungsvorrichtung nach Anspruch 2 oder 3,
**dadurch gekennzeichnet, dass** das zweite Federelement (33) das die Gleitfläche (14) enthaltende Bauteil (17) bildet oder trägt und von dem ersten Federelement (18) an der ersten Abstützstelle (16) der Führungseinheit (5, 7) abgestützt ist und selbst an der zweiten Abstützstelle (5) der Führungseinheit (5, 7) abgestützt ist.

5. Führungsvorrichtung nach einem der Ansprüche 2 bis 4,
**dadurch gekennzeichnet, dass** die erste Abstützstelle eine feste Achse (16) der Führungseinheit (7) und die zweite Abstützstelle ein die Führungseinheit (7) tragender Schlitten (5) oder ein an der Führungseinheit (7) oder dem Schlitten (5) angebrachtes Abstützteil (20) ist.

6. Führungsvorrichtung nach einem der Ansprüche 1 bis 5,
**dadurch gekennzeichnet, dass** das erste Federelement (18) ein insbesondere ringförmiges Elastomerteil ist.

7. Führungsvorrichtung nach einem der Ansprüche 1 bis 6,
**dadurch gekennzeichnet, dass** das zweite Federelement (19; 24; 29; 33) ein Elastomerteil oder eine Feder und insbesondere eine Blattfeder (29, 33) ist.

8. Führungsvorrichtung nach Anspruch 7,
**dadurch gekennzeichnet, dass** die Blattfeder (29, 33) mittels ihrer zwei insbesondere gegeneinander gerichteten Federenden (30, 31; 34, 35) an der zweiten Abstützstelle (5, 7) befestigt ist und ihr federndes Mittelteil (32 bzw. 36) mit dem die Gleitfläche (14) tragenden Bauteil (17) verbunden ist oder die Gleitfläche (14) bildet.

9. Führungsvorrichtung nach einem der Ansprüche 1 bis 6,
**dadurch gekennzeichnet, dass** das erste Federelement (18) und das zweite Federelement (24) bzw. ein weiteres Federelement Materialabschnitte eines gemeinsamen Elastomerteils sind.

10. Führungsvorrichtung nach einem der Ansprüche 1 bis 9,
**dadurch gekennzeichnet, dass** die Führungseinheit (7) bzw. der Schlitten (5) entlang einer dachfesten Führungsschiene (6) verstellbar ist.

## Claims

1. Guide device (1) for a movable roof element of a vehicle roof that can be opened
having a slotted guide (9) connected to the roof element and having a guide unit (7),
which is arranged on a carriage (5), which is accommodated such that it can be displaced along the slotted guide (9) on a guide rail (6) fixed to the roof and has two guide surfaces (12, 14) which are oriented towards each other and guide the slotted guide (9) between them,
one of the guide surfaces (14) being accommodated on the guide unit (7) such that it can be adjusted relative to the slotted guide (9) and is prestressed against the other guide surface (12) by means of a spring device (18, 19),
**characterized in that**
the spring device has two spring elements (18, 19 or 24, 29, 33) which are arranged connected in parallel on the guide unit (7).

2. Guide device according to Claim 1, **characterized in that** a component (17; 22) that contains the sliding surface (14) is supported by the first spring element (18) on a first supporting point (16) of the guide unit (5, 7) and by the second spring element (19; 24; 29) on a second supporting point (5) of the guide unit (5, 7).

3. Guide device according to Claim 2, **characterized in that** a further spring element (37, 38, 39) supports the component (17; 22) containing the sliding surface (14) on the first supporting point (16) or the second or a further supporting point (5) of the guide unit (5, 7).

4. Guide device according to Claim 2 or 3, **characterized in that** the second spring element (33) forms or carries the component (17) containing the sliding surface (14) and is supported by the first spring element (18) on the first supporting point (16) of the guide unit (5, 7) and is itself supported on the second supporting point (5) of the guide unit (5, 7).

5. Guide device according to one of Claims 2 to 4, **characterized in that** the first supporting point is a fixed axle (16) of the guide unit (7), and the second supporting point is a carriage (5) carrying the guide unit (7) or a supporting part (20) fitted to the guide unit (7) or to the carriage (5).

6. Guide device according to one of Claims 1 to 5, **characterized in that** the first spring element (18) is an in particular annular elastomer part.

7. Guide device according to one of Claims 1 to 6, **characterized in that** the second spring element (19; 24; 29; 33) is an elastomer part or a spring and in particular a leaf spring (29, 33).

8. Guide device according to Claim 7, **characterized in that** the leaf spring (29, 33) is fixed on the second supporting point (5, 7) by means of its two spring ends (30, 31; 34, 35), in particular oriented towards each other, and its springy central part (32 or 36) is connected to the component (17) carrying the sliding surface (14) or forms the sliding surface (14).

9. Guide device according to one of Claims 1 to 6, **characterized in that** the first spring element (18) and the second spring element (24) or a further spring element are material sections of a common elastomer part.

10. Guide device according to one of Claims 1 to 9, **characterized in that** the guide unit (7) or the carriage (5) can be displaced along a guide rail (6) fixed to the roof.

## Revendications

1. Dispositif de guidage (1) pour un élément mobile d'un toit ouvrant de véhicule,
avec une coulisse de guidage (9) assemblée à l'élément de toit et avec une unité de guidage (7),
unité qui est disposée sur un coulisseau (5) reçu à coulissement le long de la coulisse de guidage (9) sur un rail de guidage (6) solidaire du toit, et unité qui présente deux surfaces de guidage (12, 14) mutuellement opposées et guidant entre elles la coulisse de guidage (9),
sachant qu'une (14) des surfaces de guidage est reçue sur l'unité de guidage (7) à déplacement par rapport à la coulisse de guidage (9) et est précontrainte contre l'autre surface de guidage (12) à l'aide d'un moyen de ressort (18, 19),
**caractérisé en ce que** le moyen de ressort présente deux éléments de ressort (18, 19 ou 24, 29, 33) qui sont disposés sur l'unité de guidage (7) en étant montés en parallèle.

2. Dispositif de guidage selon la revendication 1, **caractérisé en ce qu'**un élément (17 ; 22) contenant la surface de glissement (14) est soutenu par le premier élément de ressort (18) en un premier point de soutien (16) de l'unité de guidage (5, 7), et par le deuxième élément de ressort (19 ; 24 ; 29) en un deuxième point de soutien (5) de l'unité de guidage (5, 7).

3. Dispositif de guidage selon la revendication 2, **caractérisé en ce qu'**un autre élément de ressort (37, 38, 39) soutient l'élément (17 ; 22) contenant la surface de glissement (14) au premier point de soutien (16) ou au deuxième ou en un autre point de soutien (5) de l'unité de guidage (5, 7).

4. Dispositif de guidage selon la revendication 2 ou 3, **caractérisé en ce que** le deuxième élément de ressort (33) constitue ou porte l'élément (17) contenant la surface de glissement (14) et est soutenu par le premier élément de ressort (18) au premier point de soutien (16) de l'unité de guidage (5, 7), et est soutenu de lui-même au deuxième point de soutien (5) de l'unité de guidage (5, 7).

5. Dispositif de guidage selon l'une des revendications 2 à 4, **caractérisé en ce que** le premier point de soutien est un axe fixe (16) de l'unité de guidage (7), et le deuxième point de soutien est un coulisseau (5) portant l'unité de guidage (7) ou une partie de soutien (20) installée sur l'unité de guidage (7) ou le coulisseau (5).

6. Dispositif de guidage selon l'une des revendications 2 à 5, **caractérisé en ce que** le premier élément de ressort (18) est un élément élastomère notamment annulaire.

7. Dispositif de guidage selon l'une des revendications 1 à 6, **caractérisé en ce que** le deuxième élément de ressort (19 ; 24 ; 29 ; 33) est un élément élastomère ou un ressort et notamment un ressort à lames (29, 33),

8. Dispositif de guidage selon la revendication 7, **caractérisé en ce que** le ressort à lames (29, 33) est fixé au deuxième point de soutien (5, 7) au moyen de ses deux extrémités de ressort (30, 31 ; 34, 35) notamment mutuellement opposées, et sa partie centrale (32 ou 36) à effet de ressort est reliée à l'élément (17) contenant la surface de glissement (14) ou forme la surface de glissement (14).

9. Dispositif de guidage selon l'une des revendications 1 à 6, **caractérisé en ce que** le premier élément de ressort (18) et le deuxième élément de ressort (24) ou un autre élément de ressort sont des parties de matériau d'un élément élastomère commun.

10. Dispositif de guidage selon l'une des revendications 1 à 9, **caractérisé en ce que** l'unité de guidage (7) ou encore le coulisseau (5) peut être déplacé(e) le long d'un rail de guidage (6) solidaire du toit.
